# EUROPÄISCHE PATENTSCHRIFT

(11) **EP 1 883 310 B1**
(45) Veröffentlichungstag und Bekanntmachung des Hinweises auf die Patenterteilung: **11.05.2011**
(21) Anmeldenummer: 06723748.7
(22) Anmeldetag: 27.03.2006
(51) Int. Cl.: A23G 1/00, A23G 1/20, A23G 1/21, A23G 3/00, A23G 3/02

(54) **VORRICHTUNG ZUM HERSTELLEN VON SÜSSWAREN**
DEVICE FOR THE PRODUCTION OF CONFECTIONERY
DISPOSITIF SERVANT A FABRIQUER DES CONFISERIES

(30) Priorität: 21.04.2005 DE 202005006443 U
(43) Veröffentlichungstag der Anmeldung: 06.02.2008
(73) Patentinhaber: KMB Produktions AG, 8552 Felben (CH)
(72) Erfinder: KNOBEL, Guido, CH-8552 Felben (CH)
(74) Vertreter: Weiss, Peter
(86) Internationale Anmeldenummer: PCT/EP2006/002770
(87) Internationale Veröffentlichungsnummer: WO 2006/111244

(56) Entgegenhaltungen:
- EP-A- 0 914 774
- EP-A- 1 300 086
- WO-A-97/49296
- WO-A-03/099031
- DE-A1- 4 128 905
- DE-A1- 19 732 036

## Beschreibung

Die Erfindung betrifft eine Vorrichtung zum Herstellen von Süsswaren, insbesondere von Pralinen, in Formen, gegen welche zumindest ein Stempel an einer Stempelplatte mit einer Stempelfläche auf eine Oberfläche der Form absenkbar ist.

### STAND DER TECHNIK

Pralinen oder ähnliche Süsswaren werden heute in der Regel in Formen hergestellt. Um beispielsweise eine äussere Schale einer Praline aus Schokolade zu erzeugen, die dann mit einer Füllung versehen wird, wird in Mulden einer Form flüssige Schokolade eingefüllt und dann ein gekühlter Stempel bzw. eine Mehrzahl von gekühlten Stempel an einer Stempelplatte auf diese Form abgesenkt, so dass die Stempel in die flüssige Schokolade eintauchen, der Schokolade eine gewünschte Form geben und gleichzeitig zu einem schnelleren Erstarren der Schokolade beitragen. Ein entsprechendes Verfahren und eine Vorrichtung dieser Art ist in der DE 197 32 036.8 A1 beschrieben.

Des weiteren ist aus der DE 41 28 905 A1 eine Vorrichtung zum Herstellen von Süsswarenartikel bekannt, bei der an einer Stempelträgereinheit Stempel vertikal elastisch bewegbar befestigt sind. Die Stempelträgereinheit selbst ist über seitliche Schwingen schwenkbar gelagert.

Probleme ergeben sich allerdings bei Formunebenheiten oder auch Unebenheiten der Auflagefläche für die Form. Da die Formen in vielen Fällen aus Kunststoff hergestellt sind, kann es zu einem Verzug kommen, da die Formen beim Einfüllen von warmer Schokolade erheblichen Temperaturunterschieden ausgesetzt sind. Hierdurch verziehen sich oft die Formen, so das sei uneben sind. Werden dann die Stempel an einer Stempelplatte abgesenkt, so werden oftmals Schalen mit unterschiedlichen Wandstärken erzeugt, was unerwünscht ist.

### AUFGABE

Aufgabe der Erfindung ist es, die Herstellung der Süsswarenprodukte, gleich welcher Form, zu vereinheitlichen und den gesamten Herstellungsvorgang leichter zu gestalten.

### LÖSUNG DER AUFGABE

Zur Lösung der Aufgabe führt, dass sich die Stempelplatte über zumindest einen Gummipuffer gegen ein ortsfestes Maschinenteil abstützt.

Die flexible Lagerung der Stempelplatte ermöglicht, dass diese einer Verwerfung oder einem Verzug der Form nachgeben kann, so dass hierdurch wesentlich gleichmässigere Produkte erzeugt werden, als dies bislang möglich war. Durch das Auftreffen der Stempelplatte auf die Oberfläche der Form kann zwar die Stempelplatte in gewissem Umfang die Form wieder eben drücken, jedoch ist dies auch nur in einem gewissen Umfang wünschenswert, da sonst nämliche die Mulden, die gleichfalls verzogen sind, zu stark verformt werden. Deshalb sind die flexiblen Elemente so ausgestaltet, dass sie bei Überschreiten einer Gegenkraft der Form nachgeben.

Die Stempelplatte stützt sich über den Gummipuffer gegen einen ortsfesten Maschinenteil ab. Beispielsweise kann dies der Verteilerblock für das Kühlmedium für die Stempel sein.

Als nachgiebige Elemente bieten sich die Gummipuffer an, welche sich leicht rückstellen und welche auch sehr verschleissunanfällig sind.

Damit jedoch die Stempelplatte nicht nur an den Gummipuffern hängt, ist sie noch zusätzlich über Bolzen an einem Maschinenrahmen aufgehängt, wobei diese Bolzen der Einfachheit halber jeweils eine Bohrung in dem Maschinenrahmen durchgreifen und in dieser Bohrung gleiten können. Andererseits ist dem Bolzen eine Mutter aufgeschraubt, so dass die Stempelplatte über den Bolzen, gehalten von dieser Mutter, an dem Träger hängt. Die Mutter ermöglicht auch gleichzeitig ein Einstellen der waagrechten Lage der Stempelplatte.

### FIGURENBESCHREIBUNG

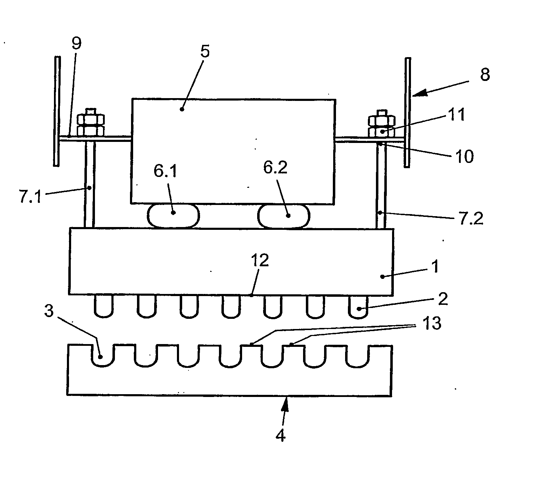

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine schematische Seitenansicht einer Vorrichtung zum Herstellen von Süsswaren.

Eine entsprechende Vorrichtung ist beispielsweise in der DE 197 32 036.8 beschrieben, wobei auf diese Anmeldung besonders Bezug genommen wird und diese auch für die allgemeine Beschreibung zum Inhalt der vorliegenden Gebrauchsmusteranmeldung gebracht wird. Dort ist, wie auch bei der vorliegenden Anmeldung, eine Stempelplatte 1 erkennbar, an der sich eine Mehrzahl von Stempel 2 befinden. Diese Stempel 2 tauchen beim Absenken der Stempelplatte 1 in Mulden 3 einer Form 4 ein und können dort eine eingegossene Schokoladenmasse verformen.

Erfindungsgemäss hängt die Stempelplatte 1 zum einen an einem ortsfesten Maschinenteil 5 und stützt sich gegenüber diesem Maschinenteil 5 über Gummipuffer 6.1 und 6.2 ab.

Des weiteren hängt die Stempelplatte 1 über Bolzen 7.1 und 7.2 an einem Maschinenrahmen 8, wobei jeder Bolzen 7.1, 7.2 eine nicht näher gezeigte Bohrung in einem Träger 9 durchsetzt. Zumindest der die Bohrung durchsetzende Teil des Bolzens 7 weist ein Gewinde auf, auf das eine Mutter 10, gekontert durch eine Gegenmutter 11, aufgeschraubt ist.

Die Funktionsweise der vorliegenden Erfindung ist folgende:

In die Mulden 3 der Form 4 wird beispielsweise flüssige Schokolade eingegeben. Die Form 4 gelangt, beispielsweise auf einem Transportband, unter die Stempelplatte 1. Zum Verformen der Schokoladenmasse in den Mulden 3 wird die Stempelplatte 1 abgesenkt, so dass die Stempel 2 in die Mulden 3 eintauchen. In Endlage liegt eine Stempelfläche 12 auf einer Oberfläche 13 der Form 4 auf. Sollte nun beispielsweise das Transportband oder ein Tisch unter der Stempelplatte 1, auf dem sich die Form 4 befindet, uneben oder die Form selbst verzogen sein, so kommt es nicht zu einem Verkanten zwischen Stempelplatte 1 und Form 4, da die Stempelplatte 1 gegen die Gummipuffer 6.1 und 6.2 zurückweicht.

Die Bolzen 7.1 und 7.2 haben die Aufgabe, die Stempelplatte 1 zu halten, damit die Stempelplatte 1 nicht nur an den Gummipuffern 6.1 und 6.2 hängt, wodurch diese Verbindung auf Dauer geschädigt werden kann. Beim Zurückweichen der Stempelplatte 1 fahren die Bolzen 7.1 und/oder 7.2 in der entsprechenden Bohrung im Träger 9 ein Stück nach oben, so dass sie einem Zurückweichen der Stempelplatte 1 nicht entgegenstehen. Wird dann die gesamte Einrichtung wieder angehoben, gleiten die Bolzen 7.1 und 7.2 in ihre Ausgangslage zurück, wobei die Stempelplatte 1 an den entsprechenden Muttern 10 hängt. Im übrigen besteht über diese Muttern 10 auch eine sehr einfach Möglichkeit, die Stempelplatte 1 gegenüber der Form 4 und/oder einem Tisch/Förderband zu justieren.

### Bezugszeichenliste

| | | | | | |
|---|---|---|---|---|---|
| 1 | Stempelplatte | 34 | | 67 | |
| 2 | Stempel | 35 | | 68 | |
| 3 | Mulde | 36 | | 69 | |
| 4 | Form | 37 | | 70 | |
| 5 | Maschinenteil | 38 | | 71 | |
| 6 | Gummipuffer | 39 | | 72 | |
| 7 | Bolzen | 40 | | 73 | |
| 8 | Maschinenrahmen | 41 | | 74 | |
| 9 | Träger | 42 | | 75 | |
| 10 | Mutter | 43 | | 76 | |
| 11 | Gegenmutter | 44 | | 77 | |
| 12 | Stempelfläche | 45 | | 78 | |
| 13 | Oberfläche | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Herstellen von Süsswaren, insbesondere von Pralinen, in Formen (4), gegen welche zumindest ein Stempel (2) an einer Stempelplatte (1) absenkbar ist,
**dadurch gekennzeichnet,**
**dass** sich die Stempelplatte (1) über zumindest einen Gummipuffer (6.1, 6.2) gegen ein ortsfestes Maschinenteil (5) abstützt.

2. Vorrichtung nach Anspruch 1, **dadurch gekennzeichnet**, das zumindest vier Gummipuffer (6.1, 6.2) im Rechteck vorgesehen sind.

3. Vorrichtung nach Anspruch 1 oder 2, **dadurch gekennzeichnet, dass** die Stempelplatte über Bolzen (7.1, 7.2) an einem Maschinenrahmen (8) aufgehängt ist.

4. Vorrichtung nach Anspruch 3, **dadurch gekennzeichnet, dass** der Bolzen (7.1, 7.2) eine Bohrung in einem Träger (9) durchgreift und andernends auf den Bolzen eine Mutter (10) aufgesetzt ist.

## Claims

1. A device for the production of confectionery, in particular of chocolates, in moulds (4), against which at least one male die (2) can be lowered on a die plate (1), **characterised in that**
the die plate (1) is supported against a fixed machine part (5) via at least one rubber buffer (6.1, 6.2).

2. A device according to Claim 1, **characterised in that** at least four rubber buffers (6.1, 6.2) are provided in a rectangle.

3. A device according to Claim 1 or 2, **characterised in that** the die plate is suspended on a machine frame (8) via bolts (7.1, 7.2).

4. A device according to Claim 3, **characterised in that** the bolt (7.1, 7.2) passes through a bore in a support (9) and a nut (10) is placed on the other end of the bolt.

## Revendications

1. Dispositif servant à fabriquer des confiseries, en particulier des pralines, dans des moules (4) dans lesquels peut être descendu au moins un poinçon (2) le long d'une plaque à poinçon (1),
**caractérisé par le fait**
**que** la plaque à poinçon (1) s'appuie par l'intermédiaire d'au moins un tampon en caoutchouc (6.1, 6.2) contre une partie de machine stationnaire (5).

2. Dispositif selon la revendication 1, **caractérisé par le fait qu'**il est prévu au moins quatre tampons en caoutchouc (6.1, 6.2) en rectangle.

3. Dispositif selon la revendication 1 ou 2, **caractérisé par le fait que** la plaque à poinçon est accrochée par l'intermédiaire de boulons (7.1, 7.2) à un cadre de machine (8).

4. Dispositif selon la revendication 3, **caractérisé par le fait que** le boulon (7.1, 7.2) traverse un alésage dans un support (9) et que, à l'autre extrémité, un écrou (10) est placé sur le boulon.
